# EUROPEAN PATENT APPLICATION

(11) **EP 4 130 907 A1**
(43) Date of publication of application: **08.02.2023**
(21) Application number: 21189891.1
(22) Date of filing: 05.08.2021
(51) Int. Cl.: G05B 19/418

(54) **METHOD AND SYSTEM FOR FACILITATING TRANSPORT OF MATERIALS VIA MATERIAL TRANSPORT NETWORK IN INDUSTRIAL ENVIRONMENT**

(71) Applicant: Siemens Aktiengesellschaft, 80333 München (DE)
(72) Inventor: A S, Habeeb Ur Rahman, 560078 Bangalore, Karnataka (IN); GUPTA, Ravi, 560068 Bangalore, Karnataka (IN); GUPTA, Sanjay Kumar, 560087 Bangalore, Karnataka (IN); MEENA, Akashay, 324005 Kota, Rajasthan (IN); SHRIVASTAVA, Mayank, 482005 Jabalpur, Madhya Pradesh (IN)
(74) Representative: Isarpatent

(57) **Abstract**

The present invention provides a method and system of facilitating transport of materials in an industrial environment (100) via a material transport network (106). The method further comprises determining a first set of route elements of the plurality of route elements (108A-F), which are present in a first logical route from a source (108A) to a destination (108C) in the material transport network (106). The method further comprises generating a second logical route (504) in the material transport network. The method further comprises generating, by the processing unit (202), a control signal which is configured to operate a second set of route elements (108A, 108D, 108F, and 108C) which are present in the second logical route (504), such that a plurality of materials along the second logical route, are transported from the source 108A to the destination 108C via the material transport network 106.

## Description

The present invention relates to a field of industrial automation systems, and more particularly relates to a method and system for facilitating automatic transport of materials via a material transport network in an industrial environment.

A technical installation such as an industrial plant comprises a material transport network to transport materials such as chemicals, foods and beverages (solid, liquid, or gas) from a source to a destination. The material transport network may be at least one of a pipeline network, a conveyer belt based transport network, or a drones based transport network. In one example, the material transport network is the pipeline network which comprises an interconnected network of pipes and a plurality of route elements like valves, pumps, sensors, actuators, and switches. Examples of sensors include pressure-transmitter, flow rate meter and encoders. The plurality of route elements are configured to control the transport of materials through the material transport network. In another example, the material transport network is the conveyer belt based transport network which comprises an interconnected network of conveyer belts and a plurality of route elements like servo motors, robotic arms, routers, switches, actuators and position sensors. In yet another example, the material transport network is the conveyer belt the drone based transport network which comprises an interconnected network of self-driving vehicle routes and a plurality of route elements like self-driving vehicles. The plurality of route elements are configured to control the transport of materials through the material transport network. The transport of materials via the material transport network, form a core element of a production process in the industrial environment. The plurality of materials is transported in the material transport network, via a plurality of logical routes. Each of the plurality of logical routes are sequences of active route elements which together form a plurality of partial routes from the source to the destination. Typically, a route search server is configured to generate a first logical route from the source to the destination via the material transport network. An industrial control system is configured to run the first logical route to transport the plurality of materials from the source to the destination via the material transport network. When the industrial control system runs the first logical route, it controls a first set of active route elements in the first logical route to transport the plurality of materials. However, sometimes one or more active route elements of the first set of active route elements, may be faulty. When the one or more active route elements are faulty, the industrial control system may be incapable of controlling the one or more active route elements to transport the plurality of materials. Thus, a fault in the one or more active route elements may cause a downtime. The downtime of the one or more active route elements which are part of the first logical route, can cause a process halt or process delay for the plurality of materials which is being transported via the material transport network. The fault in the one or more active route elements can occur due to a myriad of reasons. Manually determining one or more reasons behind the fault in the one or more active route elements is a labor and time intensive process. Further, it is very difficult and expensive to formulate remedies and engineering efforts to fix problems with the plurality of active route elements in the material transport network. The one or more active route elements which are faulty may generate errors and prevent a smooth transport of the plurality of materials via the material transport network.

In light of above, there exists a need for an efficient method and system for facilitating transport of materials via a material transport network in an industrial environment. Therefore, it is an object of the present invention to provide a method and system for facilitating transport of materials via a material transport network in an industrial environment.

The object of the invention is achieved by a method of facilitating transport of materials in an industrial environment via a material transport network. The industrial environment comprises an industrial control system and a technical installation. The industrial control system is configured to control the technical installation. The technical installation is at least one of an industrial manufacturing plant, an industrial processing plant, or an industrial power plant. The technical installation comprises the material transport network which is configured to transport a plurality of materials from a source to a destination in the technical installation. The plurality of materials comprises, chemicals, raw materials, and food. In one example, the source may be a first machine and the destination may be a second machine in the technical installation. The material transport network may be at least one of a pipeline network, a conveyer belt based transport network, or a drones based transport network. In one example, the material transport network is the pipeline network which comprises an interconnected network of pipes and a plurality of route elements like valves, pumps, sensors, actuators, and switches. Examples of sensors include pressure-transmitter, flow rate meter and encoders. In another example, the material transport network is the conveyer belt based transport network which comprises an interconnected network of conveyer belts and a plurality of route elements like servo motors, robotic arms, routers, switches, actuators and position sensors. In yet another example, the material transport network is the conveyer belt the drone based transport network which comprises an interconnected network of self-driving vehicle routes and a plurality of route elements like self-driving vehicles.

The plurality of route elements are configured to control the transport of the plurality of materials through the material transport network. For example, a route element may be a pump which is configured to pump the plurality of materials via the plurality of connection elements of the material transport network. The plurality of materials may be transported through the material transport network via a plurality of logical routes. In one example, the plurality of logical routes comprise partial routes within the material transport network, to connect the source to the destination. In other words, each logical route of the plurality of logical routes denotes a specific sequential interconnection of pipes and route elements which connect the source to the destination. An industrial control system is configured to run each logical routes of the plurality of logical routes to transport the plurality of materials from the source to the destination via the material transport network. When the industrial control system runs a logical route, it controls one or more active route elements within the specific logical route to control the transport of the plurality of materials from the source to destination.

In a preferred embodiment, the method comprises receiving, by a processing unit, real-time state information associated with the plurality of route elements in the material transport network. The real-time state information comprises information associated with a state of each of the plurality of route elements. The state of the plurality of route elements comprises at least one of a manual state, automatic state, error state, and non-error state. In one example, a route element is in the error state if the route element is faulty. Further, the route element is in the manual state if the specific route element can only be controlled by manual intervention. The real-time state information further comprises information associated with a rating of each of the plurality of route elements. The rating of the plurality of route elements comprises a pressure rating, a temperature rating, and a vibration rating. In one example, the temperature rating of a route element denotes a maximum temperature that the route element is able to withstand before the specific route element breaks down. The real-time state information further comprises information of any predicted faults in each of the plurality of route elements.

In the preferred embodiment, the method further comprises determining, by the processing unit, a first set of route elements from the plurality of route elements. The first set of route elements are route elements which are present in a first logical route from the source to the destination in the material transport network. In one example, the first logical route may be received from a route searching server. In another example, the first logical route may be received from a user.

In the preferred embodiment, the method further comprises determining, by the processing unit, at least one route element in the first set of route elements, which is in at least one of an error state or a manual state. The at least one route element is determined based on an analysis of the received real-time state information associated with the plurality of route elements. The method further comprises determining, by the processing unit, one or more route elements of the plurality of route elements which are in an automatic and a non-error state. The one or more route elements are determined by analysis of the real-time state information of the plurality of route elements. The method further comprises receiving, by the processing unit, a layout of the material transport network from a server. The layout of the material transport network comprises information about various interconnections between the plurality of route elements of the material transport network. The method further comprises analyzing, by the processing unit, the received layout to determine whether the determined at least one route element, which is in the error state or manual state, can be bypassed with the determined one or more route elements which are in the automatic and non-error state.

In the preferred embodiment, the method further comprises generating, by the processing unit, a second logical route in the material transport network, from the source to the destination. To generate the second logical route, the determined at least one route element having the error state or the manual state is replaced with the determined one or more route element having the non-error state or the automatic state. Thus, the first set of route elements of the first logical route is replaced with a second set of route elements of the second logical route. The second logical route is generated such that in the second logical route, the determined at least one route element is bypassed via the determined one or more route elements, of the material transport network. The determined one or more route elements are in the non-error state and the automatic state.

Advantageously, the determined at least one route element, which is in the error state or the manual state is bypassed. Further, advantageously, since the at least one route element which is determined to be in the error state or the manual state is bypassed, a probability of downtime is reduced in the technical installation. The method further comprises controlling, by the processing unit, a second set of route elements which are present in the second logical route, to transport a material from the source to the destination via the material transport network. The method further comprises generating a control signal which is configured to operate a second set of route elements which are present in the second logical route, such that a plurality of materials along the second logical route, are transported from the source to the destination 108C via the material transport network.

In the preferred embodiment, the method comprises detecting, by the processing unit, a change in the real-time state information associated with a first route element in the second logical route. Advantageously, the real-time state information of route elements in the second logical route is constantly monitored for changes in status. The method further comprises determining, by the processing unit, whether the first route element in the second logical route is in at least one of the error state or the manual state, based on an analysis of the change in the real-time state information associated with the first route element. The method further comprises modifying, by the processing unit, the second logical route in the material transport network such that, in the modified second logical route, the first route element is bypassed via a second route element which is in the non-error and automatic state. Advantageously, even if the first route element changes a status to the error state or the manual state, after transport of the plurality of materials is initiated, the first route element is replaced with the second route element which is in the automatic state and the non-error state. Thus, a probability of downtime for the technical installation is diminished in the industrial control system.

In the preferred embodiment, the method further comprises receiving, by the processing unit, a plurality of parameter values associated with the plurality of materials. The plurality of parameters associated with the transported material comprises a temperature, a pressure, an acidic nature, a PH level, and a density of the transported material. The plurality of parameter values is received from at least one of the user, or a server. The method further comprises comparing the plurality of parameter values of the plurality of materials with the rating of each of the plurality of route elements of the material transport network. The method further comprises determining, by the processing unit whether a first route element, of the second set of route elements, is rated to transport the plurality of materials, based on an analysis of the received plurality of parameter values associated with the plurality of materials. The determination is performed further based on the comparison of the plurality of parameter values with the rating of each of the plurality of route elements. The method further comprises modifying, by the processing unit, the second logical route in the material transport network such that, in the modified second logical route, the first route element is bypassed via a second route element which is rated to transport the plurality of materials. Advantageously, the transport of the plurality of materials is performed by only those route elements which are rated to handle the plurality of parameter values of the plurality of materials.

In the preferred embodiment, the method further comprises generating, by the processing unit, a simulation instance for the material transport network comprising the second set of route elements of the second logical route. The method further comprises simulating, by the processing unit, execution of the second logical route to transport the plurality of materials via the material transport network in a simulation environment by executing the second logical route on the generated simulation instance. The method further comprises determining, by the processing unit, whether the second logical route is valid, based on a result of the simulated execution of the second logical route on the generated simulation instance. The method further comprises displaying, by the processing unit, the second logical route on a display device. In the preferred embodiment, the method further comprises predicting, by the processing unit, an occurrence of one or more errors in a first route element of the second set of route elements based on the execution of the second logical route in the generated simulation instance. The method further comprises notifying, by the processing unit, a user about the predicted occurrence of the one or more errors in the first route element.

In the preferred embodiment, the method further comprises determining, by the processing unit, a shortest logical route between the source and the destination, by application of a route searching algorithm on the material transport network based on the real-time state information associated with the plurality of route elements. The method further comprises displaying, by the processing unit, the shortest logical route on a display device. Advantageously, a user is informed of the shortest logical route between the source and the destination. The method further comprises notifying, by the processing unit, that the at least one route element in the first logical route is in one of the error state or the manual state.

The method further comprises determining, by the processing unit, a number of times the at least one route element is in at least one of the error state or the manual state. The method further comprises determining, by the processing unit, whether the determined number of times is greater than a threshold count. The method further comprises displaying, by the processing unit, a recommendation to a user to replace the at least one route element based on the determination that the number of times is greater than the threshold count. The object of the present invention is also achieved by an industrial control system for facilitating automatic transport of materials via a material transport network. The industrial control system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an industrial control system, a technical installation comprising one or more physical components and one or more client devices communicatively coupled to the industrial control system and the technical installation. The industrial control system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of facilitating automatic transport of materials via a material transport network, according to an embodiment of the present invention;
- FIG 2: is a block diagram of an industrial control system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-D: is a process flowchart illustrating an exemplary method of facilitating automatic transport of materials via a material transport network in an industrial control system, according to an embodiment of the present invention;
- FIG 5A-B: is a schematic representation of a plurality of logical routes generated by the industrial control system, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

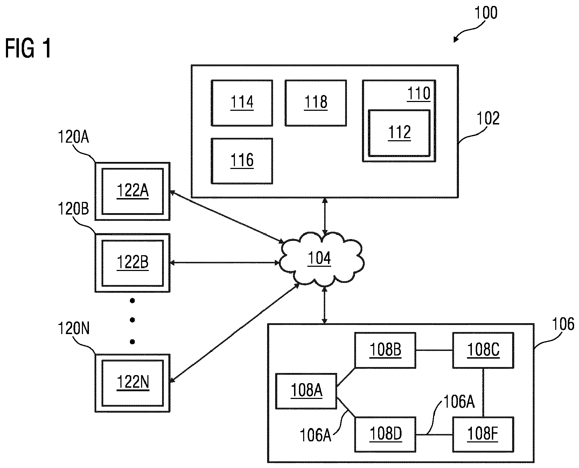

FIG 1 is a block diagram of an industrial environment 100 capable of facilitating automatic transport of materials via a material transport network, according to an embodiment of the present invention. In FIG 1, the industrial environment 100 includes an industrial control system 102 of a technical installation (not shown). The technical installation comprises a material transport network 106. The material transport network 106 comprises a plurality of route elements 108A-F and a plurality of connection elements 106A. The material transport network 106 may be at least one of a pipeline network, a conveyer belt based transport network, or a drones based transport network. In one example, the material transport network 106 is the pipeline network. In such a case, the plurality of connection elements 106A comprises an interconnected network of pipes. The plurality of route elements 108A-F comprises valves, pumps, sensors, actuators, and switches. Examples of sensors include pressure-transmitter, flow rate meter and encoders. In another example, the material transport network 106 is the conveyer belt based transport network. In such a case, the plurality of connection elements 106A comprises an interconnected network of conveyer belts. The plurality of route elements 108A-F comprises servo motors, robotic arms, routers, switches, actuators and position sensors. In yet another example, the material transport network 106 is the drone based transport network. In such a case, the plurality of connection elements 106A comprises an interconnected network of self-driving vehicle routes. The plurality of route elements 108A-F comprises self-driving vehicles.

The plurality of connection elements 106A interconnect the plurality of route elements 108A-F with each other. Further, the industrial control system 102 comprises one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to the material transport network 106 of the technical installation via the network 104 (such as Local Area Network (LAN), industrial ethernet, Wide Area Network (WAN), Wi-Fi, Internet, any short range or wide range communication). The industrial control system 102 is configured to control each of the plurality of route elements 108A-F to transport material via the material transport network 106. The industrial control system 102 is also connected to the one or more client devices 120A-N via the network 104.

The industrial control system 102 is connected to the plurality of route elements 108A-F in the material transport network 106 via the network 104. The plurality of route elements 108A-F may include valves, pumps, actuators, sensors and other industrial equipment(s). The plurality of route elements 108A-F may be connected to each other or several other components (not shown in FIG 1) via the plurality of connection elements 106A. The industrial control system 102 may also be electrically connected to the plurality of route elements 108A-F via physical connections. The physical connections may be through wiring between the plurality of route elements 108A-F. Alternatively, the plurality of route elements 108A-F may also be connected to the industrial control system 102 via non-physical connections (such as Internet of Things (IOT)) and 5G networks. Although, FIG 1 illustrates the industrial control system 102 connected to one technical installation, one skilled in the art can envision that the industrial control system 102 can be connected to several technical installations located at different geographical locations via the network 104.

The client devices 120A-N may be a desktop computer, laptop computer, tablet, smart phone and the like. Each of the client devices 120A-N is provided with an industrial controller tool 122A-N for exchanging commands, requests, settings, and configurations with the industrial control system 102 respectively. The client devices 120A-N can access the industrial control system 102 for controlling the transport of materials via the material transport network 106. Further, the client devices 120A-N are configured to visualize a plurality of process values associated with the transported material and the plurality of route elements 108A-F. The client devices 120A-N can access cloud applications (such as providing performance visualization of the plurality of route elements 108A-F via a web browser). Throughout the specification, the terms "client device" and "user device" are used interchangeably.

The industrial control system 102 may be a standalone server or may be a remote server on a cloud computing platform. In a preferred embodiment, the industrial control system 102 may be a cloud-based control system. The industrial control system 102 is capable of delivering applications (such as cloud applications) for managing the technical installation comprising the material transport network 106 and the plurality of route elements 108A-F. The engineering system 102 may comprise a platform 110(such as a cloud computing platform), an automation module 112, a server 114 including hardware resources and an operating system (OS), a network interface 116 and a database 118. The network interface 116 enables communication between the industrial control system 102 of the technical installation, and the client device(s) 120A-N. The interface (such as cloud interface) (not shown in FIG 1) may allow users at the one or more client device(s) 120A-N to access plurality of route elements 108A-F of the material transport network 106 to facilitate transport of a plurality of materials via the material transport network 106. The plurality of materials comprises chemicals, food, articles of manufacture, in solid, liquid, or gaseous state.

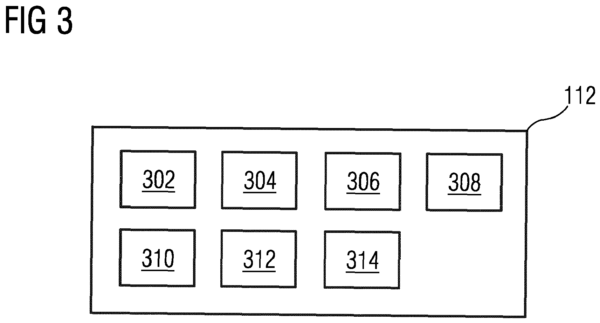

The server 114 may include one or more servers on which the OS is installed. In one example, the server 114 is a route searching server. The server 114 is configured to generate a plurality of logical routes between a source and a destination in the material transport network 106. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating engineering programs. Details of the automation module 112 is explained in FIG. 3.

The database 118 stores the information relating to the material transport network 106, the plurality of route elements 108A-F, and the client device(s) 120A-N. The database 118 is, for example, a structured query language (SQL) data store or a not only SQL (NoSQL) data store. The database 118 is configured to store real-time state information associated with each of the plurality of route elements 108A-F. The real-time state information comprises information associated with a state of each of the plurality of route elements 108A-F. The state of the plurality of route elements 108A-F comprises at least one of a manual state, automatic state, error state, and non-error state. The real-time state information further comprises information associated with a rating of each of the plurality of route elements 108A-F. The rating of the plurality of route elements 108A-F comprises a pressure rating, a temperature rating, and a vibration rating. The real-time state information further comprises information of any predicted faults in each of the plurality of route elements 108A-F. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the plurality of route elements 108A-F, test results, simulation results, status messages, one or more simulation instances, graphical programs, program logics, program logic patterns, and relationship information between plurality of route elements 108A-F, requirements, program update messages and the like.

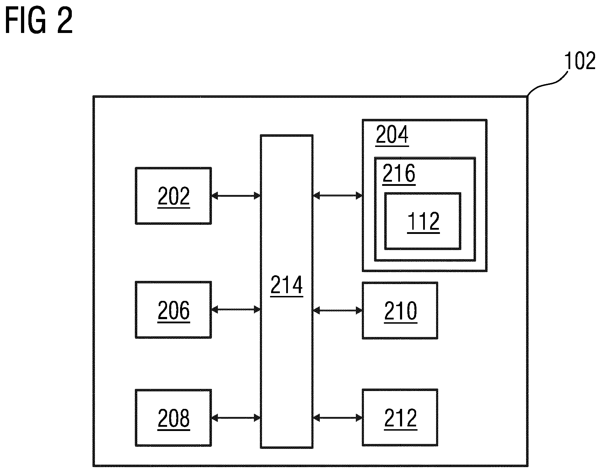

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202.

When executed by the processing unit 202, the automation module 112 causes the processing unit 202 to receive the real-time state information associated with the plurality of route elements 108A-F in the material transport network 106, from the database 118.

Further, the processing unit 202 is configured to determine a first set of route elements of the plurality of route elements 108A-N. The first set of route elements are route elements which are present in a first logical route from a source to a destination in the material transport network 106. In one example, the source is a first route element 108A of the plurality of route elements 108A-F. Further, the destination is a second route element 108C of the plurality of route elements 108A-F. In one example, the first logical route may be received from a route searching server such as the server 114. In another example, the first logical route may be received from a user via the one or more client devices 120A-N.

The automation module 112 further causes the processing unto 202 to determine at least one route element in the first set of route elements, which is in at least one of an error state or a manual state. The at least one route element is determined based on an analysis of the received real-time state information associated with the plurality of route elements 108A-F. The automation module 112 further causes the processing unit 202 to determine one or more route elements of the plurality of route elements 108A-F which are in an automatic and a non-error state. The one or more route elements are determined by analysis of the real-time state information of the plurality of route elements 108A-F. The automation module 112 further causes the processing unit 202 to receive a layout of the material transport network 106 from the server 114 or the database 118. The layout of the material transport network 106 comprises information about various interconnections between the plurality of route elements 108A-F of the material transport network 106. The automation module 112 further causes the processing unit 202 to analyze the received layout to determine whether the determined at least one route element, which is in the error state or manual state, can be bypassed with the determined one or more route elements which are in the automatic and non-error state.

The automation module 112 further causes the processing unit 202 to generate a second logical route in the material transport network 106, from the source to the destination. To generate the second logical route, the determined at least one route element having the error state or the manual state is replaced with the determined one or more route element having the non-error state or the automatic state. Thus, the first set of route elements of the first logical route is replaced with a second set of route elements of the second logical route. The second logical route is generated such that in the second logical route, the determined at least one route element is bypassed via the determined one or more route elements, of the material transport network.

The determined one or more route elements are in the non-error state and the automatic state. Advantageously, the determined at least one route element, which is in the error state or the manual state is bypassed. Further, advantageously, since the at least one route element which is determined to be in the error state or the manual state is bypassed, a probability of downtime is reduced in the technical installation. The automation module 112 further causes the processing unit 202 to control a second set of route elements which are present in the second logical route, to transport the plurality of materials from the source to the destination via the material transport network 106.

The storage unit 206 may be a non-transitory storage medium configured for storing a database (such as database 118) which comprises the real-time state information of the plurality of oute elements 108A-F.

The communication interface 208 is configured for establishing communication sessions between the one or more client devices 120A-N and the industrial control system 102. The communication interface 208 allows the one or more engineering applications running on the client devices 120A-N to import/export a plurality of logical routes into the industrial control system 102. The industrial control system 102 is configured to run any of the plurality of logical routes to control transport of the plurality of materials via the material transport network 106. When the industrial control system 102 runs a logical route of the plurality of logical routes, it controls a set of active route elements in the specific logical route to transport the plurality of materials via the material transport network 106 from the source to the destination. In one example, the source is a first route element 108A of the plurality of route elements 108A-F. Further, the destination is a second route element 108C of the plurality of route elements 108A-F.

In an embodiment, the communication interface 208 interacts with the interface at the one or more client devices 120A-N for allowing a user to access the industrial control system 102. The user is enabled to send requests to the industrial control system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a logical route of the plurality of logical routes which visualizes transport of the plurality of materials via the material transport network 106 and also displays the real-time state information associated with each of the plurality of route elements 108A-F. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, a route element status detection module 304, an analysis module 306, a modifier module 308, a route element object database 310, a validation module 312 and a deployment module 314. FIG. 3 is explained in conjunction with FIG. 1 and FIG. 2.

The request handler module 302 is configured for receiving a request to transport the plurality of materials from the source to the destination via the material transport network 106. For example, the request is received from one of the one or more users external to the industrial environment 100 via the network 104. In alternative embodiment, the request is received from the one or the one or more client devices 120AN via the network 104. The request handler module 302 is further configured to determine the source and the destination in the material transport network 106.

The route element status detection module 304 is configured for receiving the real-time state information associated with the plurality of route elements 108A-F. In a preferred embodiment, the real-time state information comprises a status of each of the plurality of route elements 108A-F. Further, the real-time state information comprises a set of process values detected by one or more sensors in each of the plurality of route elements 108A-F. The real-time state information further comprises a set of key performance indicators associated with each of the plurality of route elements 108A-F. The set of key performance indicators comprises a temperature, a flow rate, a vibration, and a pressure associated with the plurality of route elements 108A-F.

The analysis module 306 is configured for analyzing the real-time state information associated with each of the plurality of route elements 108A-F. Furthermore, the analysis module 306 is configured for retrieving data and control parameters associated with each of the plurality of route elements 108A-F. The data and control parameters are key performance indicators comprising information relating to the plurality of route elements 108A-F, for example, sensor data, actuator data, environment data, network data, any automation data and the like. Further, the analysis module 306 is configured for comparing the retrieved data and control parameters associated with the real-time state information associated with the plurality of route elements 108A-F. Furthermore, the analysis module 306 is configured for identifying deviation between the retrieved data and control parameters associated with the plurality of route elements 108A-F and the real-time state information.

The modifier module 308 is configured for modifying each of a plurality of logical routes stored in the database 118. The plurality of the logical routes is modified based on the analysis of the real-time state information of the plurality of route elements 108A-F. The modifications comprise any changes such as addition, deletion, update, replacement or revision of one or more one or more route elements from each logical route of the plurality of logical routes.

The route element object database 310 is configured for generating an route element object library comprising information associated with the plurality of route elements 108A-F, such as a rating value, a tolerance level, physical connections between one or more route elements, and a plurality of parameter values associated with the plurality of route elements 108A-F and the physical connections. The route element object database 310 is configured for continuously updating real-time state information associated with the plurality of route elements 108A-F. Also, the route element object database 310 is configured for updating the real-time state information of the plurality of route elements 108A-F frequently.

The validation module 312 is configured to generate a simulation instance for one or more logical routes of the plurality of logical routes. In one example, the simulation instance is a digital twin of one or more route elements in the material transport network 106. The validation module 312 is configured to simulate running of the plurality of logical routes in the material transport network 106 in a simulation environment by executing the plurality of logical routes on the generated simulation instance. The validation module 312 is configured to determine that each of the plurality of logical routes is valid, based on a result of the simulated execution of the plurality of logical routes. Further, the validation module 312 is configured for simulating behavior of the plurality of route elements 108A-F in the simulation environment by executing the plurality of logical routes on the generated simulation instance. The simulation environment emulates a material transport network of an actual technical installation, such as the material transport network 106. Further, the simulation environment may be a virtual setup of the actual material transport network 106. Also, the validation module 312 is configured for validating the plurality of logical routes based on results of the simulation. The results of simulation may indicate success or failure of the plurality of logical routes if run in the material transport network 106.

The deployment module 314 is configured for deploying the plurality of logical routes in real-time onto the plurality of route elements 108A-F installed in the technical installation 106 based on the validation. Advantageously, the plurality of logical routes are only deployed onto the plurality of route elements 108A-F after the determination that the plurality of logical routes is valid.

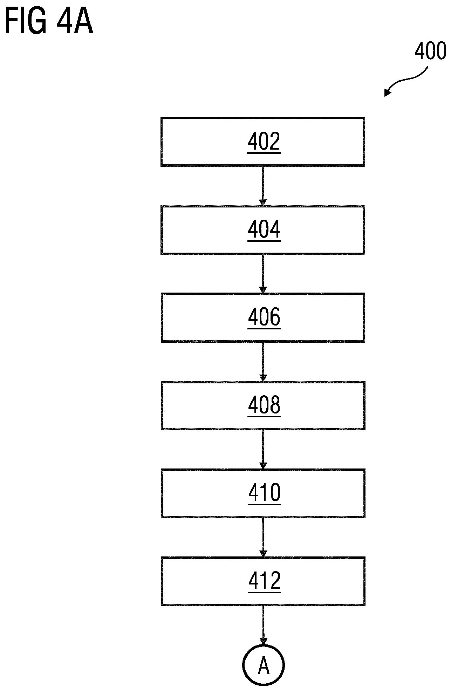

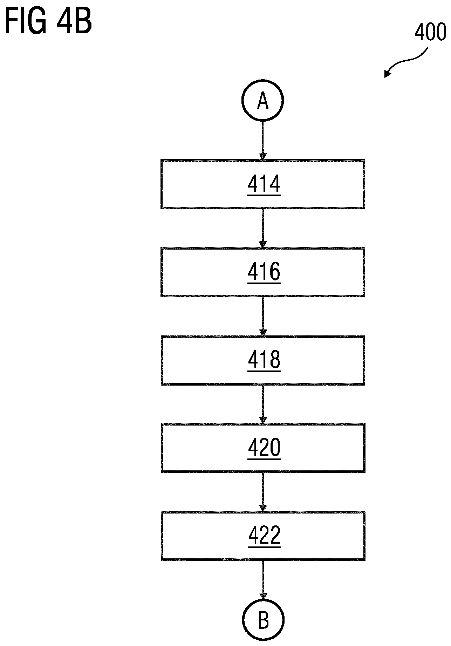

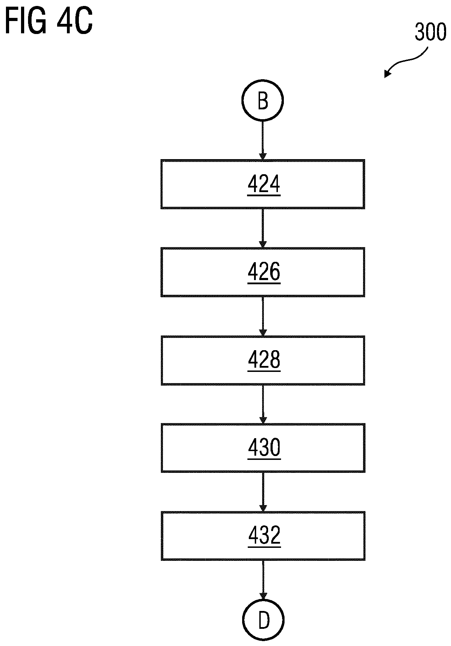

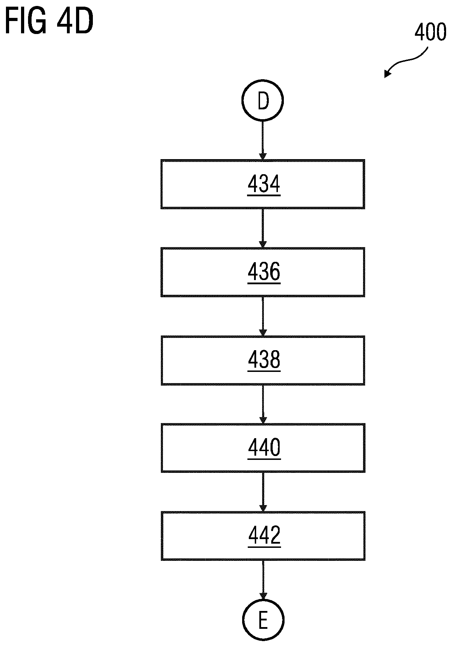

FIG 4A-D is a process flowchart illustrating an exemplary method 400 of facilitating transport of materials in an industrial environment 100 via a material transport network 106, according to an embodiment of the present invention.

At step 402, the real-time state information associated with the plurality of route elements 108A-F in the material transport network 106 is received. The processing unit 202 is configured to receive the real-time state information associated with the plurality of route elements 108A-F in the material transport network 106. The real-time state information comprises information associated with a state of each of the plurality of route elements 108A-F. The state of the plurality of route elements comprises at least one of a manual state, automatic state, error state, and non-error state. The real-time state information further comprises information associated with a rating of each of the plurality of route elements 108A-F. The rating of the plurality of route elements comprises a pressure rating, a temperature rating, and a vibration rating. The real-time state information further comprises information of any predicted faults in each of the plurality of route elements 108A-F.

At step 404, a first set of route elements of the plurality of route elements 108A-F is determined. The processing unit 202 is configured to determine the first set of route elements of the plurality of route elements 108A-F. The first set of route elements are route elements which are present in a first logical route from the source to the destination in the material transport network 106. In one example, the first logical route may be received from a route searching server such as the server 114. In another example, the first logical route may be received from a user via the one or more client device 120A-N.

At step 406, at least one route element in the first set of route elements, which is in at least one of an error state or a manual state is determined. The processing unit 202 is configured to determine that the at least one route element in the first set of route elements is in at least one of the error state or the manual state. The at least one route element is determined based on an analysis of the received real-time state information associated with the plurality of route elements.

At step 408, one or more route elements of the plurality of route elements which are in an automatic and a non-error state are determined by the processing unit 202. The one or more route elements are determined by analysis of the real-time state information of the plurality of route elements by the processing unit 202.

At step 410, a layout of the material transport network 106 is received from the server 114. The processing unit 202 is configured to receive the layout of the material transport network 106 from the server 114. The layout of the material transport network 106 comprises information about various interconnections between the plurality of route elements 108A-F of the material transport network 106.

At step 412, the received layout is analyzed to determine whether the determined at least one route element, which is in the error state or manual state, can be bypassed with the determined one or more route elements which are in the automatic and non-error state. In one example, the received layout is analyzed to determine a distance of the determined at least one route element and the determined one or more route elements to the source and the destination. The processing unit 202 is configured to analyze the received layout to determine whether the determined at least one route element, which is in the error state or manual state, can be bypassed with the determined one or more route elements which are in the automatic and non-error state.

At step 414, a second logical route in the material transport network, is generated from the source to the destination. The processing unit 202 is configured to generate a second logical route in the material transport network, from the source to the destination. To generate the second logical route, the determined at least one route element having the error state or the manual state is replaced with the determined one or more route element having the non-error state or the automatic state. Thus, the first set of route elements of the first logical route is replaced with a second set of route elements of the second logical route. The second logical route is generated such that in the second logical route, the determined at least one route element is bypassed via the determined one or more route elements, of the material transport network 106.

The determined one or more route elements are in the non-error state and the automatic state. Advantageously, the determined at least one route element, which is in the error state or the manual state is bypassed. Further, advantageously, since the at least one route element which is determined to be in the error state or the manual state is bypassed, a probability of downtime is reduced in the technical installation.

At step 416, a control signal which is configured to operate a second set of route elements which are present in the second logical route (504), is generated such that a plurality of materials along the second logical route, are transported from the source 108A to the destination 108C via the material transport network 106. The processing unit (202) is configured to generate the control signal. Further, the second set of route elements is controlled by the processing unit 202 to transport a material from the source to the destination via the material transport network 106. The processing unit 202 is configured to control a second set of route elements which are present in the second logical route, to transport a material from the source to the destination via the material transport network 106.

At step 418, a change in the real-time state information associated with a first route element in the second logical route is detected. The processor 202 is configured to detect the change in the real-time state information associated with the first route element in the second logical route. Advantageously, the real-time state information of route elements in the second logical route is constantly monitored for changes in state of the route elements.

At step 420, it is determined whether the first route element in the second logical route is in at least one of the error state or the manual state, based on an analysis of the change in the real-time state information associated with the first route element. The processing unit 202 is configured to determine whether the first route element in the second logical route is in at least one of the error state or the manual state, based on an analysis of the change in the real-time state information associated with the first route element.

At step 422, the second logical route in the material transport network 106 is modified such that, in the modified second logical route, the first route element is bypassed via the second route element which is in the non-error and automatic state. The processing unit 202 is configured to modify the second logical route in the material transport network such that, in the modified second logical route, the first route element is bypassed via the second route element which is in the non-error and automatic state. Advantageously, even if the first route element changes a status to the error state or the manual state, after transport of the plurality of materials is initiated, the first route element is replaced with the second route element which is in the automatic state and the non-error state. Thus, a probability of downtime for the technical installation is diminished by the industrial control system 102.

At step 424, a plurality of parameter values associated with the plurality of materials is received from the server 114. The processing unit 202 is configured to receive the plurality of parameter values associated with the plurality of materials. The plurality of parameters associated with the transported material comprises a temperature, a pressure, an acidic nature, a PH level, and a density of the transported material. The plurality of parameter values is received from at least one of the user, or the server 114.

At step 426, the plurality of parameter values of the plurality of materials is compared with the rating of each of the plurality of route elements 108A-F of the material transport network 106. The processing unit 202 is configured to compare the plurality of parameter values of the plurality of materials with the rating of each of the plurality of route elements of the material transport network.

At step 428, it is determined whether a first route element, of the second set of route elements, is rated to transport the plurality of materials, based on an analysis of the received plurality of parameter values associated with the plurality of materials. The processing unit 202 is configured to determine whether a first route element, of the second set of route elements, is rated to transport the plurality of materials, based on an analysis of the received plurality of parameter values associated with the plurality of materials. The determination is performed further based on the comparison of the plurality of parameter values with the rating of each of the plurality of route elements 108A-F.

At step 430, the second logical route in the material transport network 106, is modified. The processing unit 202 is configured to modify the second logical route in the material transport network 106 such that, in the modified second logical route, the first route element is bypassed via a second route element which is rated to transport the plurality of materials. Advantageously, the transport of the plurality of materials is performed by only those route elements which are rated to handle the plurality of parameter values of the plurality of materials.

At step 432, a simulation instance is generated for the material transport network 106. The simulation instance is generated for the second set of route elements of the second logical route. The processing unit 202 is configured to generate the simulation instance for the material transport network 106.

At step 434, execution of the second logical route to transport the plurality of materials via the material transport network 106 in a simulation environment is simulated. The processing unit 202 is configured to simulate execution of the second logical route to transport the plurality of materials via the material transport network 106.

At step 436, it is determined whether the second logical route is valid, based on a result of the simulated execution of the second logical route on the generated simulation instance. The processing unit 202 is further configured to display the second logical route on a display device in the one or more client device 120A-N.

At step 438, an occurrence of one or more errors in a first route element of the second set of route elements is predicted based on the execution of the second logical route in the generated simulation instance. The processing unit 202 is configured to predict the occurrence of one or more errors in the first route element of the second set of route elements based on the simulation of the second logical route in the generated simulation instance. The processing unit 202 is further configured to notify to the user about the predicted occurrence of the one or more errors in the first route element.

At step 440, a shortest logical route between the source and the destination, is determined by application of a route searching algorithm on the material transport network based on the real-time state information associated with the plurality of route elements 108A-F. The processing unit 202 is configured to determine the shortest logical route between the source and the destination, by application of the route searching algorithm on the layout of the material transport network 106 based on the real-time state information associated with the plurality of route elements 108A-F. The processing unit 202 is further configured to display the shortest logical route on a display device. Advantageously, a user is informed of the shortest logical route between the source and the destination. The processing unit 202 is further configured to notify the user that the at least one route element in the first logical route is in one of the error state or the manual state.

The processing unit 202 is further configured to determine a number of times the at least one route element is in at least one of the error state or the manual state.

At step 442, it is determined whether the determined number of times is greater than a threshold count. The processing unit 202 is configured to determine whether the determined number of times is greater than the threshold count. The processing unit 202 is further configured to display a recommendation to the user to replace the at least one route element based on the determination that the number of times is greater than the threshold count.

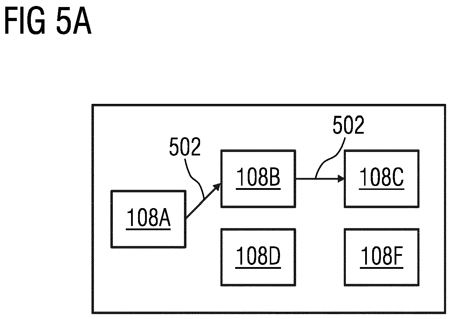

FIG 5A-B is a schematic representation of the material transport network 106, according to an embodiment of the present invention. Fig. 5A-B is described in conjunction with Figs. 1, 2, and 3.

FIG 5A-B depicts the material transport network 106 which comprises an interconnected network of pipes and a plurality of route elements 108A-F like valves and pumps. The plurality of route elements 108A-F comprises a first route element 108A, a second route element 108B, a third route element 108C, a fourth route element 108D, a fifth route element 108E, and a sixth route element 108F. The material transport network 106 is configured to transport a plurality of materials from a source to a destination in the material transport network 106. In one example, the source is the first route element 108A and the destination is the third route element 108C. The plurality of materials comprises, chemicals, raw materials, and food. In one example, a first logical route 502 can be used to connect the source 108A with the destination 108C. For example, Fig. 5A depicts the first logical route 502 which comprises a first set of route elements (the first route element 108A, the second route element 108B, and the third route element 108C). If the second route element 108B is functional, the industrial control system 102 is configured to control the first route element 108A, the second route element 108B, and the third route element 108C to transport the plurality of materials from the source 108A to the destination 108C.

The processing unit 202 is configured to receive the real-time state information associated with the plurality of route elements 108A-F in the material transport network 106. The real-time state information comprises information associated with a state of each of the plurality of route elements 108A-F. The state of the plurality of route elements comprises at least one of a manual state, automatic state, error state, and non-error state. The real-time state information further comprises information associated with a rating of each of the plurality of route elements 108A-F. The rating of the plurality of route elements comprises a pressure rating, a temperature rating, and a vibration rating. The real-time state information further comprises information of any predicted faults in each of the plurality of route elements 108A-F.

The processing unit 202 is further configured to determine the first set of route elements (108A, 108B, and 108C) of the plurality of route elements 108A-F. The first set of route elements (108A, 108B, and 108C) are route elements which are present in the first logical route 502 from the source 108A to the destination 108C in the material transport network 106. In one example, the first logical route 502 may be received from a route searching server such as the server 114. In another example, the first logical route 502 may be received from a user via the one or more client device 120A-N. The processing unit 202 is further configured to determine that the at least one route element in the first set of route elements is in at least one of the error state or the manual state. In one example, the processor 202 determines that the second route element 108B is in the error state. The second route element 108B is determined to be in the error state based on an analysis of the received real-time state information associated with the plurality of route elements 108A-F.

The processing unit 202 is further configured to determine the one or more route elements in the material transport network 106, which are in the non-error state and the automatic state. For example, the processing unit 202 determines that the fourth route element 108D and the sixth element 108F are in the non-error and automatic state. The fourth route element 108D and the sixth element 108F are determined to be in the non-error state and the automatic state by analysis of the real-time state information of the plurality of route elements 108A-F by the processing unit 202.

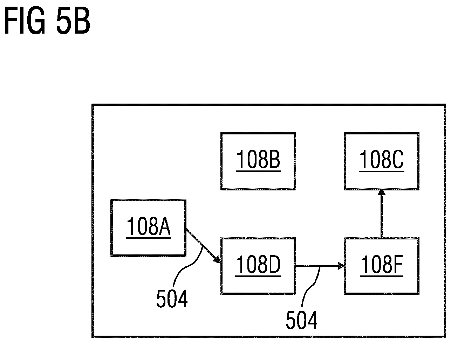

As shown in Fig. 5B, the processing unit 202 is further configured to generate a second logical route 504 in the material transport network 106. The second logical route 504 is generated from the source 108A to the destination 108C. To generate the second logical route 504, the determined at least one route element having the error state or the manual state is replaced with the determined one or more route element having the non-error state or the automatic state. For example, the second route element 108B, which is in the error state, is replaced with the fourth route element 108D and the sixth route element 108F which is in the non-error state and the automatic state. Thus, the first set of route elements (108A, 108B, and 108C) of the first logical route 502 is replaced with a second set of route elements (108A, 108D, 108F, and 108C) of the second logical route 504. The second logical route 504 is generated such that in the second logical route 504, the second route element 108B is bypassed via the fourth route element 108D and the sixth route element 108F, of the material transport network 106.

Advantageously, the second route element 108B, which is in the error state or the manual state is bypassed. Further, advantageously, since the second route element 108B which is determined to be in the error state or the manual state is bypassed, a probability of downtime is reduced in the technical installation.

The processing unit 202 is further configured to control the second set of route elements (108A, 108D, 108F, and 108C) which are present in the second logical route 504 to transport the plurality of materials from the source 108A to the destination 108C via the material transport network 106. The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference Sign List

- 100: an industrial environment
- 102: an industrial control system
- 120A-N: one or more client devices
- 104: a network
- 106: material transport network
- 108A-N: plurality of route elements
- 120A-N: one or more client devices
- 110: a platform
- 112: an automation module
- 114: a server
- 116: a network interface
- 118: a database
- 202: a processor(s)
- 204: an accessible memory
- 206: a storage unit
- 208: a communication interface
- 210: an input-output unit
- 212: a network interface
- 214: a bus
- 216: an integrated development environment (IDE)
- 302: a request handler module,
- 304: an object behavior model generation module,
- 306: an analysis module,
- 308: a modifier module
- 310: an engineering object database
- 312: a validation module
- 314: a deployment module.

- 502: first logical route
- 504: second logical route

## Claims

1. A method of facilitating transport of materials in an industrial environment (100) via a material transport network (106), the method comprising:
receiving, by a processing unit (202), real-time state information associated with a plurality of route elements (108A-F) in the material transport network 106;
determining, by the processing unit (202), a first set of route elements, of the plurality of route elements (108A-F), which are present in a first logical route (502) from a source (108A) to a destination (108C) in the material transport network 106;
determining, by the processing unit (202), at least one route element (108B) in the first set of route elements (108A, 108B, and 108C), which is in at least one of an error state or a manual state, based on an analysis of the received real-time state information associated with the plurality of route elements (108A-F);
generating, by the processing unit (202), a second logical route (504) in the material transport network (106), from the source (108A) to the destination (108C), such that in the second logical route (504), the determined at least one route element is bypassed via one or more route elements, of the material transport network (106), wherein the one or more route elements are in a non-error and automatic state; and
generating, by the processing unit (202), a control signal which is configured to operate a second set of route elements (108A, 108D, 108F, and 108C) which are present in the second logical route (504), such that a plurality of materials along the second logical route, are transported from the source 108A to the destination 108C via the material transport network 106.

2. The method according to claim 1, further comprising:
detecting, by the processing unit (202), a change in the real-time state information associated with a first route element in the second logical route (504);
determining, by the processing unit (202), whether the first route element in the second logical route (504) is in at least one of the error state or the manual state, based on an analysis of the change in the real-time state information associated with the first route element; and
modifying, by the processing unit (202), the second logical route (504) in the material transport network (106) such that, in the modified second logical route, the first route element is bypassed via a second route element which is in the non-error and automatic state.

3. The method according to claims 1, further comprising:
receiving, by the processing unit (202), a plurality of parameter values associated with the plurality of materials;
determining, by the processing unit (202), whether a first route element, of the second set of route elements, is rated to transport the plurality of materials, based on an analysis of the received plurality of parameter values associated with the plurality of materials; and
modifying, by the processing unit (202), the second logical route in the material transport network (106) such that, in the modified second logical route, the first route element is bypassed via a second route element which is rated to transport the plurality of materials.

4. The method according to claim 1, further comprising:
generating, by the processing unit (202), a simulation instance for the material transport network (106); and
simulating, by the processing unit (202), execution of the second logical route (504) to transport the plurality of materials via the material transport network (106) in a simulation environment by executing the second logical route on the generated simulation instance.

5. The method according to claims 4, further comprising:
determining, by the processing unit (202), whether the second logical route (504) is valid, based on a result of the simulated execution of the second logical route (504) on the generated simulation instance; and
displaying, by the processing unit (202), the second logical route (504) on a display device (120A-N).

6. The method according to claims 5, further comprising:
predicting, by the processing unit (202), an occurrence of one or more errors in a first route element of the second set of route elements (108A, 108D, 108F, and 108C) based on the execution of the second logical route (504) in the generated simulation instance; and
notifying, by the processing unit (202), a user about the predicted occurrence of the one or more errors in the first route element.

7. The method according to claim 1, further comprising:
determining, by the processing unit (202), a shortest logical route between the source (108A) and the destination (108C), by application of a route searching algorithm on the material transport network (106) based on the real-time state information associated with the plurality of route elements (108A-F); and
displaying, by the processing unit (202), the shortest logical route on a display device (120A-N).

8. The method according to claim 1, further comprising notifying, by the processing unit (202), that the at least one route element in the first logical route is in one of the error state or the manual state.

9. The method according to claim 1, further comprising:
determining, by the processing unit (202), a number of times the at least one route element is in at least one of the error state or the manual state;
determining, by the processing unit (202), whether the determined number of times is greater than a threshold count; and
displaying, by the processing unit (202), a recommendation to a user to replace the at least one route element based on the determination that the number of times is greater than the threshold count.

10. An industrial control system (102) for facilitating automatic transport of materials in a material transport network (106), wherein the industrial control system (102) comprises:
one or more processor(s) (202); and
a memory (204) coupled to the one or more processor(s) (202), wherein the memory comprises an automation module (112) stored in the form of machine-readable instructions executable by the one or more processor(s) (202), wherein the automation module (112) is capable of performing a method according to any of the claims 1-9.

11. An industrial environment (100) comprising:
an industrial control system (102) as claimed in claim 10;
a technical installation (106) comprising one or more physical components; and
a plurality of route elements (120A-N) of a material transport network communicatively coupled to the industrial control system (102) via a network (104), wherein the industrial control system (102) is configured to perform a method according to any of the claims 1 to 9.

12. A computer-program product, having machine-readable instructions stored therein, that when executed by a processor(s) (202), cause the processors to perform a method according to any of the claims 1-9.
